# EUROPEAN PATENT SPECIFICATION

(11) **EP 3 273 276 B1**
(45) Date of publication and mention of the grant of the patent: **23.06.2021**
(21) Application number: 17173717.4
(22) Date of filing: 31.05.2017
(51) Int. Cl.: G01V 5/00

(54) **METHOD AND SYSTEM FOR CONTROLLING SCANNING ACCELERATOR TO EMIT BEAM, AND SECURITY INSPECTION SYSTEM**
VERFAHREN UND SYSTEM ZUR STEUERUNG EINES ABTASTBESCHLEUNIGERS ZUR EMISSION EINES STRAHLS UND SICHERHEITSINSPEKTIONSSYSTEM
PROCÉDÉ ET SYSTÈME DE COMMANDE D'UN ACCÉLÉRATEUR DE BALAYAGE AFIN D'ÉMETTRE UN FAISCEAU ET SYSTÈME D'INSPECTION DE SÉCURITÉ

(30) Priority: 22.07.2016 CN 201610587291
(43) Date of publication of application: 24.01.2018
(73) Proprietor: Nuctech Company Limited, TongFang Building, Shuangqinglu, Haidian District Beijing 100084 (CN)
(72) Inventor: LI, Juxuan, Beijing 100084 (CN); LI, Wanhui, Beijing 100084 (CN); YU, Weifeng, Beijing 100084 (CN); SUN, Shangmin, Beijing 100084 (CN); HU, Yu, Beijing 100084 (CN); MA, Yuan, Beijing 100084 (CN)
(74) Representative: Cabinet Beau de Loménie

(56) References cited:
- EP-A1- 2 093 561
- EP-A2- 2 983 012
- CN-A- 105 445 808
- CN-A- 105 548 223
- US-A1- 2013 230 139

## Description

### TECHNICAL FIELD

The present disclosure relates to the field of security inspection, and more particularly, to a method and system for controlling a scanning accelerator to emit a beam and a security inspection system.

### BACKGROUND

With the rapid increase in trade between countries around the world, and the increasingly serious international security situation, security inspection systems become requisite systems for customs, airports, stations and the like of various countries.

Accelerators, which act as radiation sources for generating X-rays by accelerating electrons to shoot a target via a magnetic field or an electric field, are widely used in the security inspection systems, especially large container inspection systems. Because of the high energy, perfect penetrating effect, safe transport, and no follow-up pollution, the accelerators are more and more favored and admired by people.

In fast-type inspection systems, the application of the accelerator is becoming more and more common. At the same time, due to the fast inspection, the train is driven by the driver to pass through a scanning channel, so it is necessary to control the accelerator to emit a beam under the circumstance of further ensuring the safety of the people on the train. In addition, in order to improve the correctness of the inspection, it is necessary to further improve the quality of the scanned image

Patent document CN105445808 e.g. discloses a method and apparatus for inspecting a moving target and a control device for providing power to a betatron accelerator and place the accelerator in a stand-by state upon receiving a detection signal from a first position sensor signalling that the moving target is entering an inspection channel. The control device further controls beam-out time and mode upon determining by a second position sensor which parts are passing through the scanning zone and uses lower energy radiation for the head part than for the container part and operates the accelerator at a fixed frequency.

Therefore, the relevant art would face the following problems: how to control the accelerator to ensure that the scanned image does not deform in the case that the vehicle speed varies with time; in the process of passive scanning, how to control the timing of emitting a beam by the accelerator; in the process of scanning, how to ensure the safety of radiation protection of people in a train, a locomotive or a passenger car; how to solve the slow rising of dose of the accelerator during the image scanning; and how to obtain the real-time air values of different frequencies required for image processing of each scanning train.

The above information disclosed in this Background section is only for the purpose of reinforcing the understanding of the background of the present disclosure, and may therefore include information that does not constitute prior art known to those skilled in the art.

### SUMMARY

In view of one or more of the above problems, the present application discloses a method and system for controlling a scanning accelerator to emit a beam so that the scanned image is normal.

Other features and advantages of the present disclosure will become apparent from the following detailed description, or will be partly learned by practice of the present disclosure.

According to one aspect of the present disclosure, there is provided a method for controlling a scanning accelerator to emit a beam, according to claim 1.

According to another aspect of the present disclosure, there is provided a system for controlling a scanning accelerator to emit a beam according to claim 5. According to a further aspect of the invention, a computer program according to claim 8 is provided.

Further embodiments are provided by the dependent claims.

### BRIEF DESCRIPTION OF THE DRAWINGS

The above and other features and advantages of the present disclosure will become more apparent by describing in detail the exemplary embodiments thereof with reference to the accompanying drawings.
Fig. 1 illustrates a method for controlling a scanning accelerator to emit a beam according to an exemplary embodiment of the present disclosure;
Fig. 2 illustrates a beam-emitting curve by using an accelerator control method according to the related art;
Fig. 3 illustrates a beam-emitting curve by using an accelerator control method according to an exemplary embodiment of the present disclosure;
Fig. 4 illustrates a block diagram of a system for controlling the scanning accelerator to emit a beam according to an exemplary embodiment of the present disclosure;
Figs. 5A and 5B schematically illustrate a procedure of train security inspection by using the beam-emitting control method according to the present disclosure according to an exemplary embodiment of the present disclosure;
Fig. 6 illustrates a flow chart of a security inspection method according to an exemplary embodiment of the present disclosure;
Fig. 7 illustrates a block diagram of a security inspection system according to an exemplary embodiment of the present disclosure; and
Fig. 8 illustrates a block diagram of a security inspection system according to another exemplary embodiment of the present disclosure.

### DETAILED DESCRIPTION

The exemplary embodiments will now be described more fully with reference to the accompanying drawings. However, the exemplary embodiments may be embodied in many forms and should not be construed as limited to the embodiments set forth herein; rather, providing such embodiments makes the disclosure complete and intact, and will fully convey the concepts of the exemplary embodiments to those skilled in the art. The same reference numerals in the drawings denote the same or similar parts, and thus repeated description thereof will be omitted.

In addition, the features, structures, or characteristics described may be combined in one or more embodiments in any suitable manner. In the following description, numerous specific details are provided to give a full understanding of the embodiments of the present disclosure. However, those skilled in the art will appreciate that the technical solutions of the present disclosure may be practiced without one or more of these specific details, or may be practiced by other methods, components, materials, devices, steps, and the like. In other instances, well-known structures, methods, devices, implementations, materials, or operations are not shown or described in detail to avoid obscuring aspects of the present disclosure.

The block diagrams shown in the drawings are merely functional entities and do not necessarily have to correspond to physically separated entities. That is, these functional entities may be implemented in software form, or these functional entities or part of these functional entities may be implemented in one or more software-hardened modules, or these functional entities may be implemented in different networks and/or processor devices and/or microcontrollers.

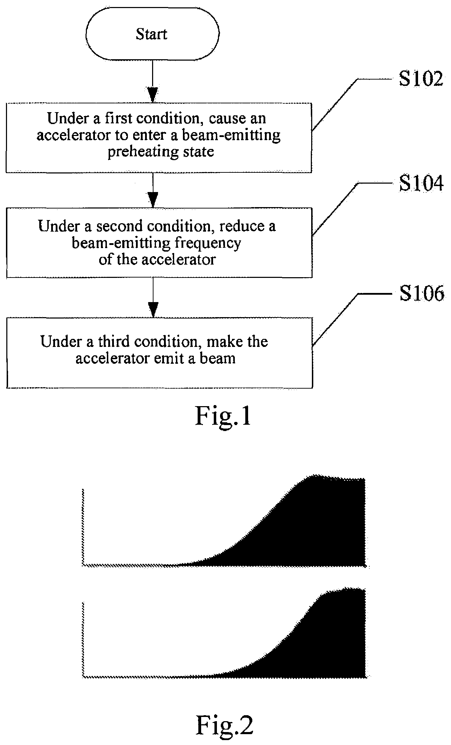

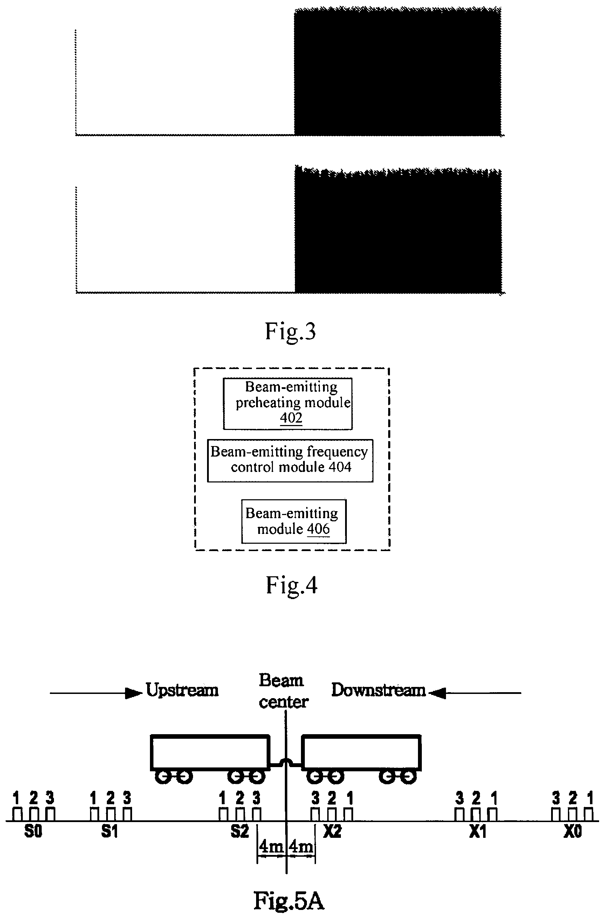

Fig. 1 illustrates a method of controlling the beam-emitting of a scanning accelerator according to an exemplary embodiment of the present disclosure. Fig. 2 illustrates a beam-emitting curve by using an accelerator control method in the related art. Fig. 3 illustrates a beam-emitting curve by using an accelerator control method according to an exemplary embodiment of the present disclosure.

There is a certain slow rise time from the beginning of the beam-emitting of the accelerator to the stability of dose. The higher the beam-emitting frequency is, the more obvious the slow rise is. There are two conditions for the beam-emitting of the accelerator: first, a microwave magnetic field is used for accelerating electrons, and second, an electron gun is used for generating electrons. The electrons are accelerated through the microwave magnetic field to bombard a target, so as to generate X-rays.

If the accelerator is applied with a high voltage and a beam-emitting frequency first, and then is applied with the electrons, then the dose rise time of the accelerator is short and stable. However, if the high voltage and the beam-emitting frequency are applied in advance, since a small amount of free electrons are existing in the accelerating tube, and these free electrons are accelerated by the microwave to shoot the target, a small amount of X-rays are generated. Since the X-rays produced by such dark current may affect people such as train drivers, it is necessary to control them to be within a small dose range that is harmless to humans. In related art, a mechanical shutter is generally used for controlling.

According to an exemplary embodiment of the present disclosure, the problem of pre-heating and slow rise of accelerator dose can be solved with reasonable control of safety.

The method according to the exemplary embodiment of the present disclosure will be described below with reference to Fig. 1. It is to be noted that Fig. 1 is merely illustrative of the processing included in the method according to the exemplary embodiment of the present disclosure, rather than limiting the present disclosure.

In step S102, an accelerator is made to enter a beam-emitting preheating state under a first condition. For example, when confirming that a target object will be scanned for inspection, the accelerator may enter the beam-emitting preheating state, but the present disclosure is not limited thereto.

According to some embodiments, as described above, enabling the accelerator to enter the beam-emitting preheating state may include: controlling the accelerator to be applied with a high voltage; controlling the beam-emitting frequency of the accelerator in a normal beam-emitting frequency range, at this time, the accelerator's electron gun is not applied with a high voltage.

In step S104, under a second condition, the beam-emitting frequency of the accelerator is reduced. For example, it is necessary to reduce the beam-emitting frequency of the accelerator when it is determined that a current portion of the target object is not scanned for inspection.

According to some embodiments, as described above, the beam-emitting frequency may be reduced to one-tenth or less of the normal beam-emitting frequency and greater than zero.

In step S106, the accelerator is made to emit a beam under a third condition. For example, when it is determined that the current portion of the target object may be started to be scanned for inspection, the beam-emitting frequency of the accelerator may be restored to the normal beam-emitting frequency, and then the electron gun of the accelerator is enabled to generate electrons, thereby causing the accelerator to emit a beam.

According to the disclosed method, the accelerator dose may be stabilized and the scanned image is normal, as shown in Fig. 3. If the conventional accelerator control scheme is used, that is, the microwave and the electron gun are simultaneously applied, there is a slow rise of dose in the accelerator, as shown in Fig. 2. The beam-emitting frequency of the accelerator is reduced to one-tenth or less of the normal speed matching frequency, but not 0, such that the dose can be restored immediately when the accelerator normally emits a beam. The X-ray generated by the dark current when the beam-emitting frequency of the accelerator is reduced to one-tenth or less of the normal speed matching frequency is harmless to the human body.

Fig. 4 shows a system for controlling beam-emitting of a scanning accelerator according to an exemplary embodiment of the present disclosure.

As shown in Fig. 4, the system for controlling the beam-emitting of the scanning accelerator according to an exemplary embodiment of the present disclosure may include a beam-emitting preheating module 402, a beam-emitting frequency control module 404, and a beam-emitting module 406.

The beam-emitting preheating module 402 may be used to advance the accelerator into a beam-emitting preheating state according to the first condition. For example, the beam-emitting preheating module 402 may be used to cause the accelerator to enter the beam-emitting preheating state when confirming that a scanning check is to be performed on the target object, but the present disclosure is not limited thereto.

According to some embodiments, as described above, in the preheating state, the accelerator is applied with a magnetic field and a high voltage, the beam-emitting frequency of the accelerator is in the normal beam-emitting range, and the electron gun of the accelerator is not applied with a high voltage.

The beam-emitting frequency control module 404 may be used to reduce the beam-emitting frequency of the accelerator under the second condition or to restore the beam-emitting frequency of the accelerator according to the third condition. For example, the beam-emitting frequency control module 404 may be used to reduce the beam-emitting frequency of the accelerator when it is determined that the current portion of the target object is not scanned for inspection. For another example, it is also possible to reduce the beam-emitting frequency of the accelerator when it is determined that the target object has not yet begun to be scanned for inspection. On the other hand, when it is determined that the current portion of the target object can be started to be scanned for inspection or the scanning check of the target object is started to be performed, the beam-emitting frequency of the accelerator may be restored to the normal beam-emitting frequency, so that the scanning check may be performed. The beam-emitting frequency control module 404 may be used to reduce the beam-emitting frequency to one-tenth or less of the normal beam-emitting frequency and greater than zero.

The beam-emitting module 406 may be used to cause the accelerator to emit a beam under a third condition. For example, the beam-emitting module 406 may enable the electron gun of the accelerator to generate electrons when it is determined that a scanning check of the current portion of the target object can be initiated, thereby causing the accelerator to emit a beam.

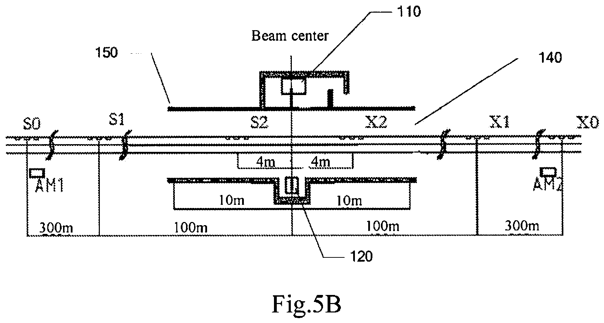

Figs. 5A and 5B schematically illustrate the process of train security inspection by using the beam-emitting control method based on the present disclosure according to an exemplary embodiment of the present disclosure.

Referring to Figs. 5A and 5B, upstream and downstream control methods are similar. Hereinafter, the explanations are given by taking the upstream control method as an example.

According to some embodiments, rim sensors are arranged at rails on both ends of a center of a scanning device, and rim signals of the train are collected by the sensors to calculate the train position, the train speed, a wheelbase, a segmentation signal of two carriages, etc., which are known technology in the art, and will not be repeated here. It is to be understood that the present disclosure is not limited thereto and other known methods may be used for measurement and calculation.

According to an embodiment, the sensor groups S0, S1, and S2 are respectively set at 400 meters (m), 100 meters and 4 meters from a center of the beam. The sensor group S2 may be used to generate a coupler signal.

Since a distance from the last wheel of the carriage to the coupler (i.e., couplers between train carriages, used for coupling the carriages) is generally 3-4 meters, the sensor group S2 may be set at about 4 meters from the center of the beam. The sensor group S2 may send, a time period in advance, a coupler signal before a center of each coupler on the train reaches the center of the beam. If the distance between the sensor group S2 and the center of the beam is G, the distance between the couplers in the two carriages (the distance between the last wheel of the previous carriage and a first wheel of the latter carriage) is D, and a first wheelbase between the first and second wheels of the latter carriage is L, then when the second wheel of the latter carriage passes through the sensor group S2, it is possible to calculate when the center of the coupler reaches/leaves the center of the beam, during which time the train is considered to be travelled at a constant speed. That is, the coupler signal may be issued at the moment when the second wheel of the latter carriage arrives at the sensor group S2, and this signal may be used to calculate a delay time of the center of the coupler reaching the center of the beam.

The sensor group S1 may, for example, be located at a position with a distance of 100 meters from the center of the beam. For example, if a maximum speed of the train is 8 m/s (meter/second), and it takes about 6-8 seconds for the accelerator from being applied with a magnetic field and a high voltage to stabilization, then for the 8m/s train, a distance about 100 meters is needed for stabilizing the accelerator.

There is a distance of such as 300 meters between the sensor group S0 and the sensor group S1, so as to provide time of about 40 seconds for an operator to determine whether it is the passenger carriage or the cargo carriage by a monitoring data line and operate a key.

When the train arrives at the sensor group S0, the system enters an ON state according to a signal of the sensor group S0, for example, prompting the operator to manually determine whether it is the passenger carriage or the cargo carriage through a video monitor, and turning a safety interlock key into the ON state.

When the vehicle arrives at the sensor group S1, the system controls the accelerator to enter the beam-emitting preheating state. In the beam-emitting preheating state, the system may control the accelerator to be applied with the high voltage, so that the beam-emitting frequency of the accelerator is added to a frequency matching with a moving speed of the train, but the electron gun of the accelerator is not applied with the high voltage.

With the movement of the vehicle, when the system identifies the train as a cargo carriage based on information of the sensor group S1, a dialog box is popped out on an operation interface, prompting the operator to confirm whether or not to scan. After the operator makes a confirmation, the dialog box disappears and the system may maintain the beam-emitting preheating state. On the contrary, when the train is identified to be a passenger car based on the information of the sensor group S1, or the operator cancels the scanning, the system may turn off the scanning device.

If the beam-emitting preheating state is maintained, and when the locomotive passes through the sensor group S2, the system may calculate the time at which the scannable cargo carriage reaches the center of the beam based on the information of the sensor group S2, which is already known in the art, and will not be repeated here. According to the calculated time, the system may control the accelerator to emit a beam so as to scan the train. Although it is shown in the drawings that the distance between the sensor group S2 and the center of the beam is 4 meters, it should be understood that this is merely illustrative and not a limitation of the present disclosure. The distance values in the drawings referred to below are similarly interpreted.

In the scanning process, when the final wheel of each carriage leaves the sensor group S2, the system may give a carriage segmentation signal for image segmentation of each carriage based on the information of the sensor group. The processing of the segmentation signal and the segmentation of the carriage image are known in the art and will not be elaborated here.

When the last carriage leaves the sensor group S2 and leaves the center of the beam, the system stops to emit the beam and the image scanning is completed.

The process of the downstream scanning is similar to that of the upstream scanning. The upstream sensor groups S0, S1 and S2 and the downstream sensor groups X1, X2 and X3 respectively include three sensor groups 1, 2 and 3. The speed and wheelbase of the train may be calculated by using two of the three sensors, and the other sensor may be used for redundancy and backup.

In this method, in order to ensure the radiation safety of people on the train, the following principles may be adopted for scanning:
a) only when the locomotive is at the front of the train, the system can start the scanning process;
b) despite the number of the locomotives, the locomotives are not scanned;
c) when the locomotive is at the front of the train, the locomotive and the cargo carriage immediately after the locomotive are not scanned;
d) when the locomotive is at the rear or in the middle of the train, the locomotive and one carriage adjacent to the front of the locomotive are not scanned;
e) if the carriage immediately adjacent to a rear part of the locomotive is a passenger carriage, then the locomotive, the passenger carriage, and one cargo carriage after the passenger carriage are not scanned; if the passenger carriage is in the middle of the train, then this passenger carriage, one carriage immediately before this passenger carriage, and one carriage immediately after this passenger carriage are not scanned; and if there are several consecutive passenger carriages, then these passenger carriages, one cargo carriage immediately before these passenger carriages, and one cargo carriage immediately after these passenger carriages are not scanned.

According to an embodiment of the present disclosure, when the train arrives at the sensor group S0, the system enters the ON state according to the signal of the sensor group S0, for example, prompting the operator to manually determine whether it is the passenger carriage or the cargo carriage through the video monitor AM1 (or a downstream AM2) and put the safety interlock key into the ON state.

When the vehicle arrives at the sensor group S1, the system may control the accelerator to be applied with the high voltage, and to be applied with the beam-emitting frequency in the beam-emitting range, for example, which may match with the speed, then the accelerator starts beam-emitting preheating. At this time, the electron gun of the accelerator is not applied with the high voltage.

With the movement of the vehicle, when the system identifies the train as a cargo carriage based on the information of the sensor group S1, a dialog box is popped out on an operation interface, prompting the operator to confirm whether or not to scan. After the operator makes a confirmation, the dialog box disappears and the system may maintain the beam-emitting preheating state. On the contrary, when the train is identified to be a passenger carriage based on the information of the sensor group S1, or the operator cancels the scanning, the system may turn off the scanning device.

When the locomotive arrives at an entrance light curtain 150 of a scanning channel 140, the beam-emitting frequency of the accelerator drops to one-tenth or less of the normal speed matching frequency, but cannot be reduced to zero, so as to facilitate the immediate recovery of the dose when the accelerator normally emits the beam. At this time, the X-ray generated by the dark current is harmless to the human body.

When the locomotive (or the locomotive and the adjacent carriage) has passed through the sensor group S2 and left the center of the beam, the beam-emitting frequency returns to a vehicle speed matching value and the microwave returns to normal. When the first carriage passes through the center of the beam, the accelerator enables the electron gun to generate electrons, and the accelerator normally emits a beam.

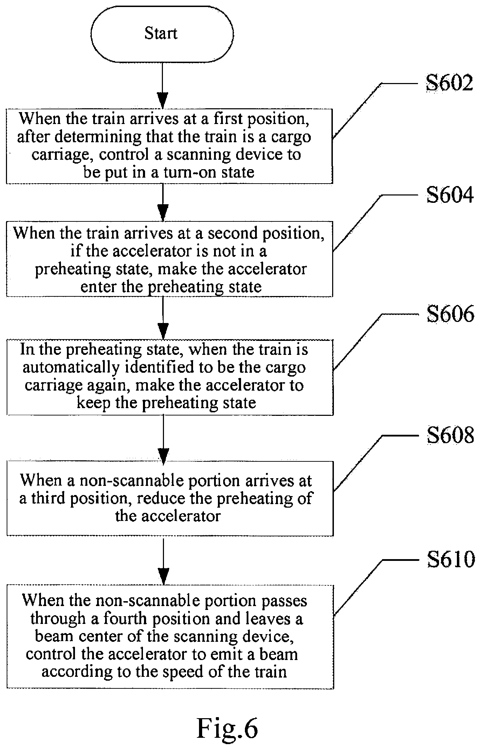

Fig. 6 shows a flow chart of a security inspection method according to an exemplary embodiment of the present disclosure.

The method shown in Fig. 6 is for carrying out a safety check on the train by using a scanning device. The scanning device may include an accelerator 110 and a detector 120 (refer to Fig. 5B). The security inspection method according to an exemplary embodiment of the present disclosure is described below with reference to Fig. 6. The method employs one or more solutions according to the previously described embodiments of the present disclosure. It is to be noted that Fig. 6 is only a schematic illustration of the processing included in the method according to the exemplary embodiment of the present disclosure, and is not intended to limit the present disclosure.

Referring to Fig. 6, in step S602, after determining that the train is a cargo carriage (truck) according to the first signal, the scanning device is controlled to be put in a turn-on state.

The first signal may be a signal for determining the arrival of the train and may be obtained by, for example, the sensor group S0. As previously described, at this time, the operator may, for example, be prompted to manually determine whether it is the passenger carriage or the cargo carriage via the video monitor and put the safety interlock key into the ON state.

In step S604, according to a second signal, if the accelerator is not in the beam-emitting preheating state, the accelerator is made to enter the beam-emitting preheating state.

As previously described, according to some embodiments, enabling the accelerator to enter the beam-emitting preheating state may include: controlling the accelerator to be applied with a high voltage; and adding the beam-emitting frequency of the accelerator to be in the normal beam-emitting range. However, at this time, the electron gun of the accelerator is not applied with a high voltage, and the second signal is a signal for judging that the train arrives at a position where the beam-emitting preheating may be performed, and may be obtained, for example, by the sensor group S1.

In step S606, in the beam-emitting preheating state, when the train is automatically identified to be the cargo carriage again, the accelerator is made to keep the beam-emitting preheating state.

For example, as the vehicle moves, when the system identifies the train as a cargo carriage based on the information of the sensor group S1, a dialog box is popped out at the operation interface to prompt the operator to confirm whether or not to scan. After the operator confirms, the dialog box disappears and the system may maintain the beam-emitting preheating state. On the contrary, when the train is identified to be a passenger carriage by the information of the sensor group S1, or the locomotive is not in the front of the train, the operator may cancel the scanning, and the system shuts off the scanning device.

In step S608, the beam-emitting frequency of the accelerator is reduced according to a third signal.

For example, at this time, the beam-emitting frequency may be reduced to one-tenth or less of the normal beam-emitting frequency. The third signal is a signal for determining that a non-scannable portion of the train reaches an entrance of a scanning channel, and the third signal may, for example, come from a sensor provided at the entrance light curtain 150 of the scanning channel 140 for performing a security inspection, but the present disclosure is not limited thereto. For example, when the technical solution of the present disclosure is applied to a fast inspection, the third signal may come from other detection elements provided at suitable locations.

As previously described, according to safety rules, the locomotive, the passenger carriage, the locomotive or the passenger carriage, and the cargo carriage adjacent to the locomotive or the passenger carriage are non-scannable portions. Easy to understand, other non-scannable portions may also be defined.

In step S610, according to a fourth signal, the beam-emitting frequency of the accelerator is restored and the accelerator is controlled to emit a beam. The fourth signal may be, for example, a signal for determining that the non-scannable portion of the train leaves the center of the beam of the scanning device, and may be obtained by, for example, the sensor group S2. According to the fourth signal, the beam-emitting frequency of the accelerator may be restored to the normal range, and then the electron gun of the accelerator is actuated to generate electrons, thereby causing the accelerator to emit a beam. Easy to understand, other determining conditions may also be adopted to control the accelerator to emit a beam according to actual conditions.

According to some embodiments, the rim sensors S0, S1, and S2 are arranged at a first position, a second position and a three position along tracks of at least one side of the scanning device, and rim signals of the train are collected by the rim sensors, so as to determine whether the train arrives at or leaves the first position, the second position, or the third position. It is possible to obtain at least one of the vehicle speed, the wheelbase, the segmentation signal of two carriages according to the rim signals of the train collected by the rim sensors, and it is also possible to determine that the train is a locomotive, a passenger carriage, or a cargo carriage according to the wheelbase, but the present disclosure is not limited thereto.

As previously described, for example, when the non-scannable portion passes through the sensor group S2, the system may calculate the time at which the scannable cargo carriage reaches the center of the beam based on the information of the sensor group S2, which are already known in the art, and will not be elaborated herein.

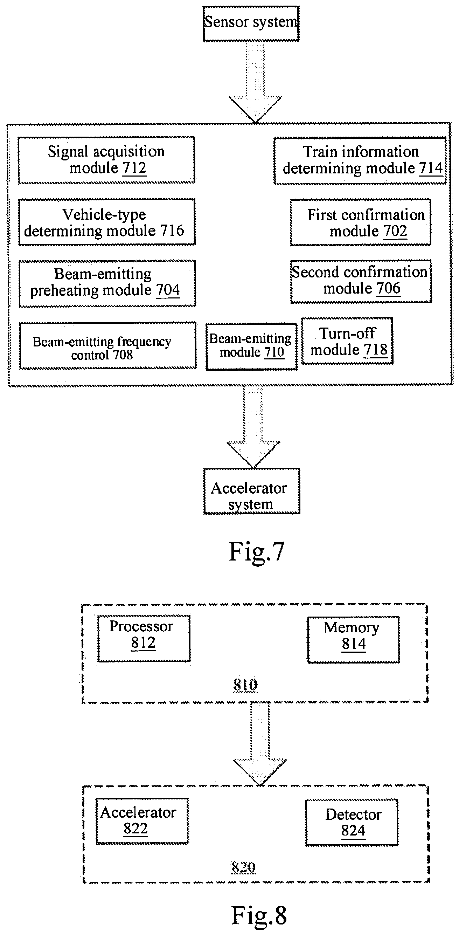

Fig. 7 shows a block diagram of a security inspection system according to an exemplary embodiment of the present disclosure. The system shown in Fig. 7 may implement the method described with reference to Fig. 6.

As shown in Fig. 7, the security inspection system according to the exemplary embodiment may include a first confirmation module 702, a beam-emitting preheating module 704, a second confirmation module 706, a beam-emitting frequency control module 708, and a beam-emitting module 710.

The first confirmation module 702 may be operable to control the scanning device into an ON state after confirming that the train is a cargo carriage according to a first signal.

The beam-emitting preheating module 704 may be used to cause the accelerator to enter a beam-emitting preheating state according to a second signal if the accelerator is not in the beam-emitting preheating state.

According to some embodiments, the beam-emitting preheating module 704 may include a high voltage application unit for controlling the accelerator to be applied with a high voltage.

The second confirmation module 706 may be used to keep the accelerator in the beam-emitting preheating state when an automatic identification is performed and the train is determined as a cargo carriage again in the beam-emitting preheating state.

The beam-emitting frequency control module 708 may be used to reduce the beam-emitting frequency of the accelerator according to a third signal or to restore the beam-emitting frequency of the accelerator according to a fourth signal. As previously described, the beam-emitting frequency control module 706 may be configured to reduce the beam-emitting frequency to one-tenth or less of a normal beam-emitting frequency or to restore the reduced beam-emitting frequency to a normal range. According to some embodiments, the beam-emitting frequency control module 708 may also match the beam-emitting frequency of the accelerator with the movement speed of the train.

The beam-emitting module 710 may be used to control the accelerator to emit a beam according to the fourth signal. According to the fourth signal, the beam-emitting module 710 may enable the electron gun of the accelerator to generate electrons, thereby causing the accelerator to emit a beam.

According to some embodiments, the system may also include a signal acquisition module 712 that collects a first signal for determining the arrival of the train, a second signal for determining that the train arrives at a position where a beam-emitting preheating may be performed on the train, a third signal for determining that a non-scannable portion of the train arrives at an entrance of a scanning channel, and a fourth signal for determining that the non-scannable portion of the train leaves a center of the beam of the scanning device. The signal acquisition module 712 may collect signals from rim sensors.

According to some embodiments, the system may further include a train information determining module 714 for obtaining a vehicle speed, a wheelbase, and a segmentation signal of two carriages based on the rim signals of the train acquired by the rim sensors.

According to some embodiments, the system may also include a vehicle-type determining module 716 for determining that the train is a locomotive, a passenger carriage, or a cargo carriage according to the wheelbase. As described above, the locomotive, the passenger carriage, the locomotive or the passenger carriage, and the cargo carriage adjacent to the locomotive or the passenger carriage are non-scannable portions.

According to some embodiments, the system may also include a turn-off module 718 for turning off the scanning device.

Fig. 8 shows a block diagram of a security inspection system according to another exemplary embodiment of the present disclosure.

As shown in Fig. 8, a security inspection system according to an exemplary embodiment may include a control device 810 and a scanning device 820. The scanning device 820 may include an accelerator 822 and a detector 824 for performing a security inspection on the train. The control device 810 may include a processor 812 and a memory 814. The memory 814 is used to store instruction codes. The instruction codes are executed by the processor 812 so that the control device 810 may execute the method as described above to control the scanning device 820.

From the foregoing detailed description, it will be readily understood by those skilled in the art that the systems and methods according to the embodiments of the present invention have one or more of the following advantages.

According to an exemplary embodiment of the present disclosure, the problem of preheating and the slow rise of dose in the accelerator can be solved with reasonable control of safety.

According to the disclosed method, the dose of the accelerator can be stabilized and the scanned image is normal.

The dose can be immediately restored when the accelerator emits a beam normally.

The X-ray generated by the dark current when the beam-emitting frequency of the accelerator is reduced to one-tenth or less of the normal speed matching frequency is harmless to the human body.

Through the above description of the embodiments, it will be easily understood by those skilled in the art that the methods and corresponding modules of the embodiments of the present disclosure may be implemented via software or hardening of part software. Thereby, the technical solutions of the embodiments of the present disclosure may be embodied in the form of software product. The software product may be stored in a non-volatile storage media (which may be CD-ROMs, USB disks, mobile hard disks, etc.), including several instructions for enabling a computing device (which may be a personal computer, a server, a mobile terminal, or a network device, etc.) to execute the methods according to the embodiments of the present disclosure.

It will be understood by those skilled in the art that the drawings are merely schematic diagrams of example embodiments and that the modules or processes in the drawings are not necessarily required to implement the present disclosure and are therefore not intended to limit the scope of the present disclosure.

It will be understood by those skilled in the art that the above-described modules may be distributed in the device in accordance with the description of the embodiments, or may be modified correspondingly to be located in one or more devices different from the present embodiment. The modules of the above embodiments may be combined into one module, or may be further divided into multiple submodules.

## Claims

1. A method for controlling a scanning accelerator to emit a beam, comprising:
causing (S102) the accelerator (822) to enter a beam-emitting preheating state under a first condition;
reducing (S104) a beam-emitting frequency of the accelerator (822) under a second condition; and
restoring (S106) the beam-emitting frequency of the accelerator (822) so as to cause the accelerator (822) to emit a beam under a third condition, wherein
the first condition comprises: determining that a scanning check is to be performed on a target object;
the second condition comprises: determining that no scanning check is to be performed on a current portion of the target object; and
the third condition comprises: determining that the scanning check may be started to be performed on the current portion of the target object.

2. The method of claim 1, wherein the causing the accelerator (822) to enter the beam-emitting preheating state (S102) comprises:
controlling the accelerator (822) to be applied with a high voltage;
controlling the beam-emitting frequency of the accelerator (822) in a normal beam-emitting frequency range; and
not applying a high voltage to an electron gun of the accelerator (822).

3. The method of claim 1 or 2, wherein the reducing (S104) the beam-emitting frequency of the accelerator (822) comprises: reducing the beam-emitting frequency to one-tenth or less of a normal beam-emitting frequency and greater than zero.

4. The method of any one of claims 1 to 3, wherein the causing (S106) the accelerator (822) to emit the beam comprises:
enabling an electron gun of the accelerator (822) to generate electrons, thereby causing the accelerator (822) to emit the beam.

5. A system for controlling a scanning accelerator (822) to emit a beam, comprising:
a beam-emitting preheating module (402) configured to cause the accelerator (822) to enter a beam-emitting preheating state according to a first condition;
a beam-emitting frequency control module (404) configured to reduce a beam-emitting frequency of the accelerator (822) according to a second condition, or restore the beam-emitting frequency of the accelerator (822) according to a third condition; and
a beam-emitting module (406) configured to control the accelerator (822) to emit a beam according to the third condition, wherein
the first condition comprises: determining that a scanning check is to be performed on a target object;
the second condition comprises: determining that no scanning check is to be performed on a current portion of the target object or the scanning check has not yet been started to be performed on the target object; and
the third condition comprises: determining that the scanning check may be started to be performed on the current portion of the target object.

6. The system of claim 5, wherein in the preheating state, the accelerator (822) is applied with a magnetic field and a high voltage, the beam-emitting frequency of the accelerator (822) is in a normal beam-emitting frequency range, and no high voltage is applied to an electron gun of the accelerator (822).

7. The system of claim 5 or 6, wherein the beam-emitting frequency control module (404) is configured to reduce the beam-emitting frequency to one-tenth or less of a normal beam-emitting frequency and greater than zero.

8. A computer program comprising instructions to cause the system of claims 5-7 to execute the steps of the method according to any one of claims 1 to 4.

## Patentansprüche

1. Verfahren zur Steuerung eines Abtastbeschleunigers zum Emittieren eines Strahls, umfassend:
Bewirken (S102), dass der Beschleuniger (822) unter einer ersten Bedingung in einen Strahlenemissions-Vorerhitzungszustand eintritt,
Vermindern (S104) einer Strahlenemissionsfrequenz des Beschleunigers (822) unter einer zweiten Bedingung, und
Wiederherstellen (S106) der Strahlenemissionsfrequenz des Beschleunigers (822), um zu bewirken, dass der Beschleuniger (822) unter einer dritten Bedingung einen Strahl emittiert, wobei
die erste Bedingung umfasst: Bestimmen, dass eine Abtastprüfung an einem Zielobjekt durchzuführen ist,
die zweite Bedingung umfasst: Bestimmen, dass keine Abtastprüfung an einem gegenwärtigen Abschnitt des Zielobjekts durchzuführen ist, und
die dritte Bedingung umfasst: Bestimmen, dass die Abtastprüfung gestartet werden kann, um an dem gegenwärtigen Abschnitt des Zielobjekts durchgeführt zu werden.

2. Verfahren nach Anspruch 1, wobei das Bewirken, dass der Beschleuniger (822) in den Strahlenemissions-Vorerhitzungszustand (S102) eintritt, umfasst:
Steuern des Beschleunigers (S822), um eine Hochspannung daran anzulegen,
Steuern der Strahlenemissionsfrequenz des Beschleunigers (822) in einem normalen Strahlenemissionsfrequenzbereich, und
Nichtanlegen einer Hochspannung an eine Elektronenkanone des Beschleunigers (822).

3. Verfahren nach Anspruch 1 oder 2, wobei das Vermindern (S104) der Strahlenemissionsfrequenz des Beschleunigers (822) umfasst: Vermindern der Strahlenemissionsfrequenz auf ein Zehntel oder weniger einer normalen Strahlenemissionsfrequenz und größer als null.

4. Verfahren nach einem der Ansprüche 1 bis 3, wobei das Bewirken (S106), dass der Beschleuniger (822) den Strahl emittiert, umfasst:
Aktivieren einer Elektronenkanone des Beschleunigers (822) zum Erzeugen von Elektronen, wodurch bewirkt wird, dass der Beschleuniger (822) den Strahl emittiert.

5. System zum Steuern eines Abtastbeschleunigers (822) zum Emittieren eines Strahls, umfassend:
ein Strahlenemissions-Vorerhitzungsmodul (402), das dazu ausgestaltet ist, zu bewirken, dass der Beschleuniger (822) gemäß einer ersten Bedingung in einen Strahlenemissions-Vorerhitzungszustand eintritt,
ein Strahlenemissionsfrequenz-Steuerungsmodul (404), das dazu ausgestaltet ist, eine Strahlenemissionsfrequenz des Beschleunigers (822) gemäß einer zweiten Bedingung zu vermindern oder die Strahlenemissionsfrequenz des Beschleunigers (822) gemäß einer dritten Bedingung wiederherzustellen, und
ein Strahlenemissionsmodul (406), das dazu ausgestaltet ist, den Beschleuniger (822) zu steuern, um einen Strahl gemäß der dritten Bedingung zu emittieren, wobei
die erste Bedingung umfasst: Bestimmen, dass eine Abtastprüfung an einem Zielobjekt durchzuführen ist,
die zweite Bedingung umfasst: Bestimmen, dass keine Abtastprüfung an einem gegenwärtigen Abschnitt des Zielobjekts durchzuführen ist oder die Abtastprüfung noch nicht gestartet wurde, um an dem Zielobjekt durchgeführt zu werden, und
die dritte Bedingung umfasst: Bestimmen, dass die Abtastprüfung gestartet werden kann, um an dem gegenwärtigen Abschnitt des Zielobjekts durchgeführt zu werden.

6. System nach Anspruch 5, wobei in dem Vorerhitzungszustand ein Magnetfeld und eine Hochspannung an den Beschleuniger (822) angelegt werden, die Strahlenemissionsfrequenz des Beschleunigers (822) sich in einem normalen Strahlenemissionsfrequenzbereich befindet und keine Hochspannung an eine Elektronenkanone des Beschleunigers (822) angelegt wird.

7. System nach Anspruch 5 oder 6, wobei das Strahlenemissionsfrequenz-Steuerungsmodul (404) dazu ausgestaltet ist, die Strahlenemissionsfrequenz auf ein Zehntel oder weniger einer normalen Strahlenemissionsfrequenz und größer als null zu vermindern.

8. Computerprogramm, das Anweisungen umfasst, um zu bewirken, dass das System nach Anspruch 5 bis 7 die Schritte des Verfahrens nach einem der Ansprüche 1 bis 4 ausführt.

## Revendications

1. Procédé pour la commande d'un accélérateur à balayage afin qu'il émette un faisceau, comprenant :
le fait d'amener (S102) l'accélérateur (822) à entrer dans un état de préchauffage d'émission de faisceau sous une première condition ;
la réduction (S104) d'une fréquence d'émission de faisceau de l'accélérateur (822) sous une deuxième condition ; et
le rétablissement (S106) de la fréquence d'émission de faisceau de l'accélérateur (822) de façon à amener l'accélérateur (822) à émettre un faisceau sous une troisième condition, dans lequel
la première condition comprend : la détermination qu'une vérification par balayage doit être réalisée sur un objet cible ;
la deuxième condition comprend : la détermination qu'aucune vérification par balayage ne doit être réalisée sur une partie actuelle de l'objet cible ; et
la troisième condition comprend : la détermination que la vérification par balayage peut être démarrée pour être réalisée sur la partie actuelle de l'objet cible.

2. Procédé selon la revendication 1, dans lequel le fait d'amener l'accélérateur (822) à entrer dans l'état de préchauffage d'émission de faisceau (S102) comprend :
la commande de l'accélérateur (822) afin qu'une haute tension lui soit appliquée ;
la commande de la fréquence d'émission de faisceau de l'accélérateur (822) dans une plage de fréquences normales d'émission de faisceau ; et
la non-application d'une haute tension à un canon à électrons de l'accélérateur (822).

3. Procédé selon la revendication 1 ou 2, dans lequel la réduction (S104) de la fréquence d'émission de faisceau de l'accélérateur (822) comprend : la réduction de la fréquence d'émission de faisceau jusqu'à un dixième ou moins d'une fréquence normale d'émission de faisceau et supérieure à zéro.

4. Procédé selon l'une quelconque des revendications 1 à 3, dans lequel le fait d'amener (S106) l'accélérateur (822) à émettre le faisceau comprend :
l'activation d'un canon à électrons de l'accélérateur (822) afin qu'il génère des électrons, amenant ainsi l'accélérateur (822) à émettre le faisceau.

5. Système pour la commande d'un accélérateur à balayage (822) afin qu'il émette un faisceau, comprenant :
un module de préchauffage d'émission de faisceau (402) configuré pour amener l'accélérateur (822) à entrer dans un état de préchauffage d'émission de faisceau selon une première condition ;
un module de commande de fréquence d'émission de faisceau (404) configuré pour réduire une fréquence d'émission de faisceau de l'accélérateur (822) selon une deuxième condition, ou rétablir la fréquence d'émission de faisceau de l'accélérateur (822) selon une troisième condition ; et
un module d'émission de faisceau (406) configuré pour commander l'accélérateur (822) afin qu'il émette un faisceau selon la troisième condition, dans lequel
la première condition comprend : la détermination qu'une vérification par balayage doit être réalisée sur un objet cible ;
la deuxième condition comprend : la détermination qu'aucune vérification par balayage ne doit être réalisée sur une partie actuelle de l'objet cible ou que la vérification par balayage n'a pas encore été démarrée pour être réalisée sur l'objet cible ; et
la troisième condition comprend : la détermination que la vérification par balayage peut être démarrée pour être réalisée sur la partie actuelle de l'objet cible.

6. Système selon la revendication 5, dans lequel dans l'état de préchauffage, un champ magnétique et une haute tension sont appliqués sur l'accélérateur (822), la fréquence d'émission de faisceau de l'accélérateur (822) est dans une plage de fréquences normales d'émission de faisceau, et aucune haute tension n'est appliquée à un canon à électrons de l'accélérateur (822).

7. Système selon la revendication 5 ou 6, dans lequel le module de commande de fréquence d'émission de faisceau (404) est configuré pour réduire la fréquence d'émission de faisceau jusqu'à un dixième ou moins d'une fréquence normale d'émission de faisceau et supérieure à zéro.

8. Programme d'ordinateur comprenant des instructions pour amener le système selon les revendications 5 à 7 à exécuter les étapes du le procédé selon l'une quelconque des revendications 1 à 4.
